# EUROPEAN PATENT SPECIFICATION

(11) **EP 1 415 930 B1**
(45) Date of publication and mention of the grant of the patent: **05.04.2006**
(21) Application number: 02257569.0
(22) Date of filing: 31.10.2002
(51) Int. Cl.: B65D 30/08, B65D 33/00, B65D 33/22, B32B 27/08, B65D 65/40

(54) **Improved flexible packaging container and method of sealing a flexible container**
Verbessertes flexibles Verpackungsbehältnis und Verfahren zum Versiegeln eines flexiblen Behältnisses
Récipient d'emballage flexible amélioré et procédé de scellage d'un récipient flexible

(43) Date of publication of application: 06.05.2004
(73) Proprietor: Cryovac, Inc., Duncan, South Carolina 29334-0464 (US)
(72) Inventor: Longo, Eugenio, 20017 Rho, Milan (IT)
(74) Representative: Barlow, Roy James

(56) References cited:
- WO-A-00/78545
- WO-A-01/68363
- US-A- 4 235 365

## Description

The present invention relates to improved flexible plastic packaging containers such as bags, pouches or wrappers, and one particularly advantageous embodiment relates to a packaging bag for heat-sealing at an open end so as to enclose a product within the bag.

There are known packaging bags and pouches for various articles, for example food articles, and these comprise a flexible bag or pouch having an open mouth through which the product may be inserted, possibly followed by either removal of atmosphere from within the bag to cause a soft vacuum or a more severe vacuum, or even introduction of a flushing gas to remove atmospheric air from within the bag and to replace it by an inert gas for optimum storage conditions of the product within the bag. The mouth of the bag or pouch is then closed, typically by heat-sealing, to define a package which can be opened at some later date.

Recently it has been discovered that certain commercially available bags can be sealed also when they are stacked on top of one another, i.e. that the mouth of the stacked bags can be closed by heat sealing while the outer surfaces of the bags will not seal to one another and in certain cases will not even stick to one another. This characteristic of so-called "stack sealability" (or also "overlap sealability") provides an advantage, particularly for packaging in a vacuum chamber, because the vacuum chamber, although typically having only one sealing means, has more than enough space therewithin for multiple bagged products which are to be sealed after evacuation of the atmosphere from the chamber.

Thus, the stack sealability feature, i.e. the possibility of sealing a number of stacked bags in one shot, being able later to separate them without negatively affecting the bag outer surface and thus the bag overall appearance, enables the evacuation and sealing of more than one bag at a time in a vacuum chamber, thereby increasing the production rate of the vacuum chamber packaging apparatus. Stack sealability is considered to be a great advantage also for continuous automatic production cycles as the presence of an operator manually correcting any overlapped positioning of the bags in the vacuum chambers is no longer needed.

The key requirement to get stack sealability in the prior art seems to be that the sealing temperature of the film layer that in the end bag will be the innermost one, i.e. the bag heat-sealing layer, be lower and preferably much lower than the sealing temperature of the film layer that in the end bag will be the outermost one, i.e. the abuse layer. In this way carrying out the heat sealing step by heating to a temperature sufficient to heat-seal the sealing layers of the stacked bags, will not lead to any sticking of the resins used for the outer bag surfaces.

The selection of specific resins, particularly high melting resins, to be used in the same structure with low melting resins, in order to guarantee stack sealability, may however negatively affect the other properties of the bags, such as the optical properties, the shrink properties (if heat-shrinkable bags are to be obtained), and the mechanical properties thereof (particularly if an oriented and possibly heat-set film is then converted into bags).

US-A-5,336,549 and WO-A-99/44824 describe particular film structures, i.e. particular resins for the various layers and particular sequences of layers, that can be used to get stack sealable bags endowed also with good optical, shrink and mechanical properties.

Particularly when heat-shrinkable bags are desired, said films are however difficult to be manufactured as orientation of high melting resins, such as polyesters and certain polyamides, requires very high orientation temperatures that sometimes may be incompatible with the use of a low melting resin for the sealing layer.

There is therefore a need for multi-layer thermoplastic films and flexible containers obtained therefrom, such as bags, pouches or wrappers, that are stack-scalable and at the same time can be easily manufactured.

WO 01/68363 discloses a multilayer film having at one face an outer heat-sealing layer and on the opposite face an outer layer which in one embodiment may be a "peelable" blend of resin materials. Such a film is suited for form-fill-sealing (HFFS or VFFS) where it is desired that the tranverse fin seals between packages will be very strong whereas the longitudinal lap seal closing each package will be a peelable seal.

It has now been found that it is possible to obtain stack sealable containers by using, in an otherwise conventional structure, a peelable thermoplastic material for the outer layer of the container.

A first aspect of the present invention is therefore a fin sealed flexible container made of a thermoplastic multilayer film, said container comprising an open mouth through which a product can be introduced into the container and which can be closed by fin sealing, after introduction of the product, to define a sealed container; wherein the outermost layer of said flexible container comprises a peelable thermoplastic composition.

"Peelable thermoplastic composition" as used herein is intended to refer to a thermoplastic material that can be layered, by extrusion, co-extrusion, or coating of a substrate, said material being characterized in that, when two surfaces of said material are adhesively bonded one to the other, thus forming a "peelable" seal, they can be easily separated in the original plane of joining by pulling them apart without any wrenching off or tearing occurring in the material.

There are known containers made of multilayer thermoplastic films, which have peelable compositions in the innermost sealing layer thereof. These containers, generally named easy-openable or EZO containers, can be opened without having to cut off the sealed mouth of the pouch or bag, just by pulling apart by hand the two sheets of film making up the walls of the bag or pouch.

The packaging container in accordance with the present invention therefore embodies a feature which is known in the art (a peelable thermoplastic composition) but uses it in a manner which is totally opposed to that of the known EZO containers in that whereas traditionally the peelable compositions are present on the inwardly facing walls of the container at the sealable mouth, in accordance with the present invention the important requirement is for the peelable composition to be on the exterior of the container. The interior of the mouth region may indeed equally exhibit easy-openability characteristics but this is not the main principle of the present invention.

A second aspect of the present invention provides a process for forming closed packaging bags or pouches comprising inserting a product into each of a plurality of bags or pouches and sealing the bags or pouches to enclose the products sealed within the bags or pouches, characterised in that the external surface of the bags or pouches is of a peelable material and in that the internal surface of the bags or pouches is a sealant layer which can be joined to itself along a fin seal.

In order that the present invention may more readily be understood the following description is given, merely by way of example, with reference to the accompanying drawings in which:-
Figure 1 is a top plan view of an assembly of five packaging bags or pouches in accordance with the present invention placed in at least partially overlapping configuration ready for sealing using a single pair of heat-sealing jaws to engage simultaneously all of the bags or pouches of the array;
Figure 2 is a plan view showing how two such packaging bags or pouches would alone occupy the full length of the heat sealing bars which is adequate to seal the five bags or pouches in Figure 1; and
Figure 3 shows in sectional view two of the bags or pouches of Figure 1 along a section line which intersects both of the partially overlapping bags or pouches.

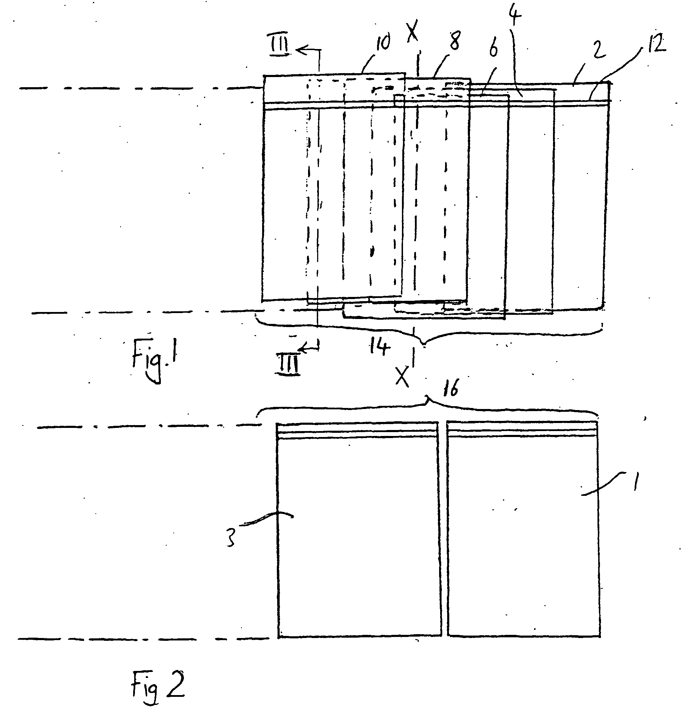

Referring now to the illustration in Figure 1, there will be seen an assembly of five bags, 2, 4, 6, 8 and 10 all in partially overlapping configuration. In this example the bags may be either transverse or side-sealed (TS) bags, formed from a continuous centre-folded web of plastic film using the centre-fold to define the closed end of the bag and fin seals along the side edges or end-sealed (ES) bags formed from continuous film tubing using the side seams of lay-flat tubing as the side edges of the bag and employing a transverse fin seal to define the closed end of that bag where the bag material is separated from the next successive bag formed from that lay-flat tubing. The same construction of bag is used in Figure 2, as will be described later.

In Figure 1 there is shown a continuous straight seal line 12 defined by upper and lower sealing bars, in this case heat sealing bars, which are not shown in Figure 1 but which would be movable towards and away from another in order to close them against the assembly of bags 2, 4, 6, 8 and 10 for sealing purposes and then separated in order to allow that same assembly of bags to be removed. The assembly 14 of bags in Figure 1 occupies a predetermined width corresponding to the seal length shown in Figure 1, and upon separation of the seal bars (not shown) that seccable assembly 14 of bags will be held together by virtue of the heat seal occurring between the exterior of one bag (for example the upper face of bag 2, 4, 6 or 8 of assembly 14) with the underside of the adjacent bag (for example the lower face of bag 4, 6, 8 or 10 of that assembly 14). This allows for economy of sealing energy in that one operation of the seal bars will simultaneously close five separate containers. Furthermore the seccable assembly 14 ofbags thus obtained can then be either removed by one operative and placed on an appropriate delivery conveyor for transportation to a subsequent processing station, or can simply be separated by that operative in order to allow some other end use of the sealed packs, or again can automatically be delivered to the next step in the packaging process. The fact that the exterior surface of each of the bags 2, 4, 6, 8 and 10 is a peelable composition allows the bags to be separated readily from one another whenever this action is required. The closing fin seal between the inwardly facing surfaces of the bag maintains the bag closed during this separating action.

In particular, it may be desirable to separate the bags from one another soon after the fin sealing step and merely take advantage of the possibility of stack sealing them; or it may be desirable to be able to further process the seccable assembly obtained from the stack sealing step up to a downstream stage in the overall packaging process and then separate the bags just before the product distribution cycle or just before display of the package on the shelves; or again it may be desirable to distribute and sell the seccable assembly where the single bags can then be separated by the end user when needed. By suitably selecting the peelable composition used for the bag outer layer and the width of the fin seal, it is thus possible to achieve any of the above end results. When the peel strength (in N/25.4 mm) of the peelable composition, at an angle of 180°, multiplied by 1/25.4 of the width of the seal, in mm, is below about 1.0 N, preferably below about 0.70 N, and more preferably below about 0.50 N, then the bags in the assembly can be easily separated one from the other by the further processing of the assembly of packaged products downstream the vacuum chamber. When the peel strength of the peelable composition, at an angle of 180°, multiplied by 1/25.4 of the width of the fin seal, in mm, is comprised between about 2.0 N and about 8.0 N. preferably between about 2.5 N and about 7.0 N and more preferably between about 3.0 N and about 6.0 N, then it will be possible to distribute and sell the packaged products in the form of a seccable assembly of bags containing them and the end user will easily separate them, or each one of them, from the rest of the assembly, when desired. When the peel strength of the peelable composition, at an angle of 180°, multiplied by 1/25.4 of the width of the seal, in mm, is between these two ranges, i.e. between about 1.0 N and about 2.0 N, then the seccable assembly can be separated into the single bags during the packaging process downstream the vacuum chamber but generally it will be necessary to facilitate said separation either manually or mechanically.

To evaluate the peel strength (in N/25.4 mm), strips of 25.4 mm in width and 300 mm in length were cut from samples of films used for the manufacture of representative containers of the present invention, sealed together with the outer layer of the peelable composition sealed to itself. Once the specimens were prepared, the evaluation of the peel strength at an angle of 180° was carried out by laying the specimen on a horizontal plane, separating manually the two sealed webs until the lower one could be fixed to said horizontal plane and the upper one could be fixed into a clamp of an Instron dynamometer capable of moving along the plane, parallel to the strip of the specimen. The Instron instrument was then started and the specimen was peeled apart generating a written record of the force required to do that.

When, according to a preferred embodiment of the present invention the stack-sealable containers are made of a cold-oriented heat-shrinkable material, the assembly of sealed and vacuumized bags 14 containing the packaged products is moved from the vacuum chamber either to a shrink tunnel or to a shrink bath. In the former case a hot water shower hits the packages that are moving through the shrink tunnel on a conveyor, while in the latter case the packages are plunged for few seconds in a hot water bath. In both cases, when the peel strength of the peelable composition, at an angle of 180°, multiplied by 1/25.4 of the width, in mm, of the seal is below 1.0 N, the bags may separate one from the other during the shrinking step or - if this is not sufficient - some irregular motion of the packages could be generated in order to ease their separation. As an example, when a hot water bath is used to shrink the vacuumized and sealed packages, it will be sufficient to introduce into the water tank a vertical pole that will force the packages into a disorganized motion to readily separate them.

The new flexible container of the present invention is characterised by the fact that the outermost layer thereof is of a peelable thermoplastic composition. There are several blends of resins which are known and currently used as peelable compositions for the innermost layer in the conventional EZO containers and that can suitably be employed for the outermost layer in the stack-sealable containers of the present invention.

Non limitative examples of peelable compositions that may suitably be employed for the outermost layer of the flexible containers according to the present invention are those blends based on polybutene-1, such as the PB8640 and the PB8640M grades manufactured and commercialised by Basell, with any of polyethylenes, linear polyethylenes, ethylene-vinyl acetate copolymers, ethylene-methyl acrylate copolymers, and the like resins; or those blends based on modified ethylene-vinyl acetate copolymers such as the Appeel® 72D727 and 72D731 resins manufactured and commercialised by DuPont; the blends of ethylene-vinyl acetate copolymer and ionomer described in EP-A-192,131; the blends of polybutene, polyethylene and polypropylene described in EP-A-213,698; the blends of optionally modified high density polyethylene and polybutene described in EP-A-333,990; the blends of polyethylene, butene-propylene copolymer and polypropylene described in US-A-5,128,414; the blends of ethylene-vinyl acetate copolymer, plastomer, and polybutene described in EP-A-916,482; the blends of polyethylene and ionomer described in US Re 30,726; the blends of ionomer and propylene-α-olefin copolymers described in US-A-4,279,344 and 4,539,263; the blends of an ionomer dipolymer with an ionomer terpolymer described in US-A-4,346,196; the blends of metallocene polyethylene and polybutene described in Research Disclosure RD 384033 (Derwent AN 207296/199621); the blends of heterogeneous polyethylene, metallocene polyethylene, and butene homo- or copolymer described in WO 99/33913; the blends of a copolymer of ethylene and acrylic or methacrylic acid, a modified ethylene-vinyl acetate copolymer and polybutylene described in WO 99/54398; and the blends of ethylene-vinyl acetate copolymer, polystyrene, and ethylene-acrylic acid copolymers described in KR 2001/095476 (Derwent AN 326697/200236).

Thickness of this outermost layer is not critical for the scope of the present invention. It is however preferred to use thin layers, e.g. up to about 15 µm, preferably up to about 10 µm, and even more preferably up to about 8 µm as these compositions are generally expensive with respect to the other resins that may be employed, and there is no need to have thicker layers in order to achieve the desired stack-sealability.

In order to guarantee that the container is maintained closed during the separation of the stack of fin sealed bags into the separate bags, the containers of the present invention will have a heat-sealing layer as the container innermost layer. Said layer can be made of any of the thermoplastic resins or resin blends known in the art for this purpose, such as typically polyolefins, such as heterogeneous and/or homogeneous ethylene, propylene, or higher α-olefins homo-, co-, or ter-polymers, wherein ethylene homo- and copolymers, such as for instance ethylene-α-olefin copolymers and ethylene-vinyl acetate copolymers, and blends thereof are mostly preferred.

It is also possible however to suitably select said heat-sealable layer, and possibly also the layer directly adhering thereto, in such a way to obtain stack-sealable containers that are at the same time also easy-openable. In this case it will be necessary to select said resins in such a way to ensure that the peel force necessary to separate the two inwardly facing surfaces of the bag at the mouth-closing fin seal is greater than the peel force necessary to separate the exterior of one bag from the exterior of the next adjacent bag so that separation of the bags occurs with a peel force which is lower than the peel force necessary to open the bag mouth.

There are several mechanisms by which easy-openability of the stack-sealable container of the invention can be achieved. In a first one, this is obtained by suitably selecting for said innermost layer a peelable composition characterised by peel strength higher than that of the peelable composition chosen for the outermost layer. In a second mechanism the innermost layer is a very thin sealing layer, made of a conventional heat-sealing resin, as indicated above, directly adhered to a core layer of a thermoplastic material having a poor bond with the thin heat-sealing layer, so that opening of the container will occur through breakage of the heat-sealing layer and delamination thereof from the adjacent core layer. In a third mechanism, the easy openability is obtained by using in the innermost heat-seal layer, or in an inner layer directly adhered to a very thin heat-seal layer, a resin blend that has a low cohesive strength (e.g. those described in WO 99/54398) so that opening of the bag will occur through breakage of the very thin heat-sealing layer, if any, followed by the cohesive failure of the adjacent layer.

Anyway, once the composition of the outermost layer is chosen, the composition of the innermost heat-sealing layer and possibly of the inner layer directly adhered thereto might be suitably selected so that the fin sealed package may subsequently be opened without the need for cutting away the closed mouth or using any mechanical assistance, by virtue of an EZO action which does not occur until after the bags have been separated from the assembly 14 at their lower peel strength interface.

The advantages of using a stack-sealable bag in a packaging process, even when single packages are desired, are apparent. In case of a batch production the economy of the sealing action is the key advantage while in case of an automatic continuous process the key advantage resides in the lower number of rejects obtained in the absence of an operator, because overlapped packages can as well be sealed without problems.

In particular the economy of sealing action evident using the bags of Figure 1 can be seen by reference to the array 16 of two adjacent bags or pouches 1 and 3 which do not overlap. In this case the sealing energy is required only to fin seal the inwardly facing surface of the bag walls together and because there is no need for any overlapping of the bags the thickness of the two bags 1 and 3 is effectively the thickness of either one of those bags, whereas at worst the assembly 14 of bags in Figure 1 has a thickness which is four times greater than this, in that four bags can be stacked one on top of another near their mouth regions before the sealing jaws come together to effect sealing and joining of the seccable bags.

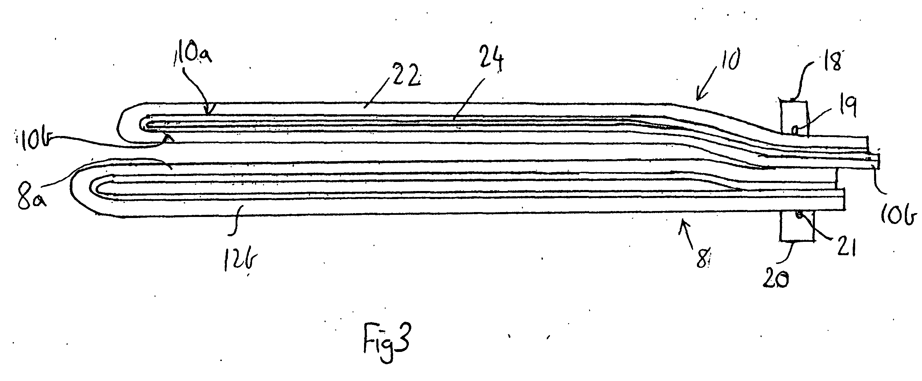

Figure 3 shows, in cross-section, the bags 8 and 10 of the assembly 14 in Figure 1 superposed and engaged by upper and lower sealing bars 18 and 20 having respective impulse sealing wires 19 and 21. The sealing bars are both flexible in nature so as to be able to accommodate the difference in thickness between the end regions of the assembly 14 where simply the bag 2 or the bag 10 are present (having therefore a thickness of 2 film plies), and the centre of the assembly along line X-X where the superposed bags 2,4, 6 and 8 present a total thickness of 8 film plies, hence 4 times thicker than at the ends and twice as thick as the region depicted in Figure 3 where bags 8 and 10 together present 4 film plies superposed between the upper and lower sealing bars 18 and 20.

The construction of bag 8 is the same as bag 10, and they are both side-sealed (TS) bags. The material forming the bag is of a multi-layer construction and is shown in relatively simplified form as having a main wall portion 22 with an inner sealant layer 24 bonded to it The purpose of the sealant layer is that it should be capable of readily being heat-sealed to itself so that when pressure is applied along the mouth region between the bars 18 and 20 in Figure 3, the sealant layer 24 adheres itself to form the fin seal to close the bag at the mouth end. The same sealing heat will of course generate a fin sealing action between the outermost film layer 22 at the lower wall 10b of bag 10 contacting the upper wall 8a of the lower bag 8, hence joining or tacking the bags together in the seccable assembly 14 of bags 2, 4, 6, 8 and 10 of Figure 1.

Preferably the multilayer thermoplastic film used for the manufacture of the flexible containers of the present invention comprises a gas-barrier layer, i.e- a layer capable of reducing the transmission of oxygen through the film. Non-limitative examples of polymers that can be used for the gas-barrier layer are EVOH, PVDC, polyamides and blends of EVOH with polyamides.

Depending on the end use, the thickness of the gas-barrier layer will be set in order to provide the overall multi-layer film with the desired Oxygen Transmission Rate (OTR). For high barrier applications, the required OTR (evaluated by the method described in ASTM D-3985) is lower than 10, and preferably lower than 5 cm³/m².d.atm, when measured at 23 °C and 0 % of relative humidity and when EVOH or PVDC are employed as the gas-barrier material, this is achieved with a barrier layer 2.5-6 µm thick. Thicker layers can be used if desired or if a lower OTR is needed, or when a polymer with lower barrier properties, such as a polyamide or a blend of EVOH and polyamide, is employed. Thinner layers can be employed if medium barrier or low barrier multi-layer structures are desired.

Additional layers that may be present in the multilayer film used for the containers of the present invention are tie or adhesive layers that are employed to better adhere one layer to another in the overall structure. In particular, if a barrier layer is present the film may include a tie layer directly adhered to one or both sides of the barrier layer. The tie layers are of a sufficient thickness to provide the adherence function, as is known in the art. Tie layers may include polymers having grafted polar groups, and useful polymers for tie layers include ethylene-unsaturated acid copolymers, ethylene-unsaturated ester copolymers, anhydride-modified polyolefins, polyurethane, and mixtures thereof.

Other layers that may possibly be present are for instance "bulk" layers or "structural" layers, i.e. layers generally of polymers which are inexpensive relative to other polymers in the film and which may be used to improve the abuse or puncture resistance of the structure or just to provide the desired thickness, may be present. Preferred polymers for these layers are typically heterogeneous or homogeneous polyolefins, such as ethylene homo- and co-polymers, e.g. polyethylenes, ethylene-vinyl acetate copolymers, linear polyethylenes, ethylene-(meth)acrylic acid copolymers, ethylene-alkyl (meth)acrylate copolymers, ionomers, propylene homo- and copolymers, butene homo- and co-polymers. The thickness of the bulk layers that may possibly be present in the structure will depend mainly on the thickness desired for the overall structure.

The multi-layer film used for the manufacture of the containers of the present invention may include any number of layers, and preferably it will include from 2 to 9 layers and more preferably from 3 to 7 layers. A higher number of layers is however possible.

The overall thickness of the structure is typically up to 200 µm, preferably up to 150 µm and more preferably up to 120 µm. Films with an overall thickness of from about 30 to about 90 µm, preferably of from about 35 to about 80 µm, and more preferably of from about 40 to about 70 µm, are typically employed for the manufacture of containers according to the present invention.

One or more of any of the layers of the multilayer film may include appropriate amounts of additives typically included in structures for food packaging for the desired effect, as is known to those of skill in the packaging films art. For example, a layer may include additives such as slip agents (e.g., as talc), antiblock agents, antioxidants, fillers, dyes and pigments, cross-linking enhancers, cross-linking inhibitors, radiation stabilizers, oxygen scavengers, antistatic agents, antifog agents, and the like agents.

Any suitable co-extrusion process, either through a flat or a round extrusion die, may afford the multi-layer film used for the manufacture of the containers of the present invention. Alternatively said multilayer film can also be obtained through extrusion coating, where one or more layers are simultaneously or sequentially extruded on a pre-formed sheet of the other film layer(s). Still alternatively, lamination, such as heat lamination or glue lamination, starting from separate pre-formed film layers could be employed for the manufacture of the multi-layer film.

The overall film or only one or more of the thermoplastic layers thereof, may be cross-linked to e.g. improve the strength of the film and/or help to avoid burn through during heat seal operations. Cross-linking may be achieved by using chemical additives or by subjecting the film layers to an energetic radiation treatment, such as a high-energy electron beam treatment, to induce cross-linking between molecules of the irradiated material.

The film can be mono- or bi-axially oriented, i.e. cold-oriented (or solid state oriented) in either the machine or transverse direction, or both, to give a heat-shrinkable film and end container, or it can be mono- or bi-axially cold-oriented and then heat-set to give a heat-stable oriented film and end container with improved strength and durability, or it can be substantially non oriented, as typically obtained with films prepared by cast extrusion processes or only accidentally oriented as generally obtained with structures prepared by the hot blown manufacturing process.

In a preferred embodiment, the multi-layer film from which the container of the present invention is made is a cold-oriented heat-shrinkable material, and even more preferably of a bi-axially oriented heat-shrinkable material. In a more preferred embodiment the multi-layer film from which the container of the present invention is made shrinks by at least 10 % in at least one direction, and more preferably in both directions, when heated to 95 °C for 5 seconds.

In a most preferred embodiment said multi-layer oriented heat-shrinkable film is gas-barrier.

The manufacture of a multi-layer film with an outer layer of a peelable thermoplastic composition is however well known from the prior art and is not an important aspect of the present invention.

The important difference between the present invention and the prior art is that whereas the external layer of a conventional flexible container is not required to be peelable (and it would therefore be unthinkable for the man in the art to go to the trouble of providing such characteristics to the external layer at a fin seal), in accordance with the present invention, regardless of whether or not the inwardly facing layers of the flexible container exhibit EZO characteristics, it is necessary for the outermost layer to be peelable. The multi-layer film thus obtained is therefore converted into the flexible containers of the present invention keeping the peelable layer as the outermost layer of the container, by conventional methods as indicated above. In particular when according to a preferred embodiment the film is extruded through a round die and possibly cold-oriented by the trapped bubble technology, the obtained seamless tubing with the outermost layer of thermoplastic peelable composition is flattened and converted into either end-seal bags which are typically made by transversely heat-sealing across the width of the flattened tubing followed by severing the tubing so that the transverse seal forms the bottom of a bag, or into side-seal bags in which two transverse seals form the sides of the bag and one edge of the flattened tubing forms the bottom of the bag and the mouth of the bag is created by slitting the other edge of the flattened tubing.

The flexible tubing of multilayer thermoplastic material, and in particular seamless tubing, comprising an outermost (external) layer of a thermoplastic peelable composition, can be considered a direct precursor of the container of the present invention and represents a further specific object of the present invention.

With reference to the bags of Figures 1 to 3, resins that can suitably be employed for the sealant layer 24 comprise heterogeneous or homogeneous linear low density polyethylene (LLDPE) or very low density polyethylene (VLDPE) and a suitable peelable composition for the outermost bag layer 22 is a mixture of ethylene vinyl acetate (EVA) with polybutylene (PB).

More particularly a preferred embodiment of multi-layer film suitable for the manufacture of containers according to the present invention has a physical structure, in terms of number of layers, layer thickness, and layer arrangement, and a chemical composition in terms of the various polymers, etc. present in each of the layers, as set forth in Table I below. The film was obtained by the trapped bubble process, involving co-extrusion through a round die, followed by a quick quenching, reheating of the thus obtained primary thick tube to a temperature of about 90-92 °C and bi-axial orientation (with orientation ratios of about 3:1 transversally and 3.5:1 longitudinally) to get a cold oriented heat-shrinkable film.

**Table I**

| Layer no. | Layer components | Thickness (µm) |
|---|---|---|
| 1 (innermost) | Ethylene-octene-1 copolymer with d = 0.911 g/cm³ and MFI = 6 g/10 min (ASTM D1238 -190 °C, 2.16 Kg) | 10 |
| 2 | Ethylene-vinyl acetate copolymer 9 % VA with MFI = 3 g/10 min | 25 |
| 3 | PVDC | 5 |
| 4 | Ethylene-vinyl acetate copolymer 9% VA with MFT = 3 g/10 min | 7.5 |
| 5 (outermost) | Blend of 70 % of ethylene-vinyl acetate 9 % VA with MFI = 3 g/10 min and 30 % of polybutylene (PB8640 by Basell) | 7.5 |

The ES bags obtained from the above film by laying flat the obtained oriented tubing and sealing transversely to create the bag bottom and at the same time severing to obtain the mouth of the adjacent bag, were loaded, vacuumised and stack-sealed. When the seal width was 2 mm, the stack sealed bags did separate one from the other simply by submitting them to a shrink step in a shrink tunnel with a hot water shower.

Another preferred embodiment of multi-layer film suitable for the manufacture of containers according to the present invention has the same structure indicated in Table I but a different ratio of the components of the blend of layer 5 : 85 % of ethylene-vinyl acetate copolymer and 15 % of polybutylene. Also in this case, when the width of the fin seal was 2.5 mm, the stack-sealed bags separated one from the other very easily during the shrinking step.

Still another preferred embodiment of multi-layer film suitable for the manufacture of containers according to the present invention has a physical structure, in terms of number of layers, layer thickness, and layer arrangement, and a chemical composition in terms of the various polymers, etc. present in each of the layers, as set forth in Table II below.

**Table II**

| Layer no. | Layer components | Thickness (µm) |
|---|---|---|
| 1 (innermost) | Ethylene-octene-1 copolymer with d = 0.911 g/cm³ and MFI = 6 g/10 min (ASTM D1238 - 190 °C, 2.16 Kg) | 10 |
| 2 | Ethylene-vinyl acetate copolymer 9 % VA with MFI = 3 g/10 min | 15 |
| 3 | Maleic anhydride grafted EVA | 3 |
| 4 | Ethylene-vinyl alcohol copolymer | 4 |
| 5 | Maleic anhydride grafted EVA | 3 |
| 6 | Polyethylene with d = 0.924 g/cm³ and MFI = 0.75 g/10 min | 7.5 |
| 7 (outermost) | Blend of 47 % of polyethylene with d = 0.919 g/cm³ and MFI = 1.5 g/10 min, 25 % of ethylene-octene-1 copolymer with d = 0.919 g/cm³ and MFI = 1 g/10 min, and 28 % of polybutylene (PB8640 by Basell) | 7.5 |

In the packaging process according to the present invention, the construction of seal bars 18 and 20 which can accommodate the differing thicknesses along the assembly 14 as discussed above is well within the ability of the man in the art and the choice of materials of the seal bars, as well as the other parameters relating to the sealing action can be found by experiment. The peel strength of the exterior of the bag or pouch can thus be engineered in terms of the sealing parameters and the constituents of the film layers so as to provide the desired results indicated above.

## Claims

1. A flexible packaging container (10) comprising an open mouth through which a product can be introduced into the container and which can be closed by a fin seal after introduction of the product to define a sealed container, wherein the flexible container is formed by fin sealing of a thermoplastic multi-layer film, **characterised in that** the outermost layer of said flexible container comprises a peelable thermoplastic composition.

2. A container according to claim 1 in the form of a bag or pouch (10) including opposed walls (10a, 10b) which have a first face at the interior of the bag or pouch and a second face on the exterior of the bag or pouch, wherein the first face is presented by a sealant film layer and the second face is presented by said peelable material.

3. A bag or pouch according to claim 2 wherein the sealant layer exhibits easy open characteristics.

4. A bag or pouch according to claim 3 wherein the peel force required to open the bag or pouch (10) by separation of the sealant layers of the bag walls is higher than the peel strength required to separate the exteriors of adjacent bags from one another.

5. A bag or pouch according to any one of claims 2 to 4 wherein the film of the bag or pouch (10) is a cold-oriented and heat-shrinkable film.

6. A packaging container according to any one of claims 1 to 5 **characterised in that** the wall (10a, 10b) of the container includes at least one barrier layer.

7. A process for forming packages of closed packaging bags or pouches (8, 10) comprising inserting a product into each of a plurality of bags or pouches (8, 10) and scaling the bags or pouches to enclose the products sealed within the bags or pouches, **characterised in that** the external surface of the bags or pouches comprises a peelable thermoplastic composition and **in that** the internal surface of the bags or pouches is a sealant layer which can be joined to itself along a fin seal.

8. A process according to claim 7 wherein several (14) of the bags or pouches are assembled in an at least partially overlapped superposed relationship when they are being closed by the sealing step.

9. A process according to claim 8 **characterised in that** the material of the packaging bags is a cold-oriented heat-shrinkable material, and **in that** a heat shrinking step is employed on the assembly of bags after sealing.

10. A process according to claim 9 **characterised in that** the heat shrinking step is carried out before or simultaneously with the step of separating the sealed bags from the assembly.

## Revendications

1. Récipient d'emballage flexible (10) comprenant une embouchure ouverte à travers laquelle un produit peut être introduit dans le récipient et qui peut être fermée par scellage à bords repliés après introduction du produit pour former un récipient scellé, dans lequel le récipient flexible est formé par scellage à bords repliés d'un film multicouche thermoplastique, **caractérisé en ce que** la couche externe dudit récipient flexible comprend une composition thermoplastique pelable.

2. Récipient selon la revendication 1 sous la forme d'un sac ou poche (10) comprenant des parois opposées (10a, 10b) qui ont une première face à l'intérieur du sac ou poche et une seconde face sur l'extérieur du sac ou poche, dans lequel la première face est présentée par une couche de film de scellage et la seconde face est présentée par ledit matériau pelable.

3. Sac ou poche selon la revendication 2 dans lequel la couche de scellage présente des caractéristiques d'ouverture aisée.

4. Sac ou poche selon la revendication 3 dans lequel la force de pelage requise pour ouvrir le sac ou poche (10) par séparation des couches de scellage des parois du sac est supérieure à la résistance au pelage requise pour séparer les extérieurs de sacs adjacents l'un de l'autre.

5. Sac ou poche selon l'une quelconque des revendications 2 à 4 dans lequel le film du sac ou poche (10) est un film orienté à froid et thermorétractable.

6. Récipient d'emballage selon l'une quelconque des revendications 1 à 5 **caractérisé en ce que** la paroi (10a, 10b) du récipient comprend au moins une couche de barrière.

7. Procédé pour former des emballages de sacs ou poches d'emballage fermés (8, 10) comprenant l'insertion d'un produit dans chacun parmi une pluralité de sacs ou de poches (8, 10) et le scellage des sacs ou poches pour enfermer les produits scellés dans les sacs ou les poches, **caractérisé en ce que** la surface externe des sacs ou des poches comprend une composition thermoplastique pelable et **en ce que** la surface interne des sacs ou poches est une couche de scellage qui peut être soudée à elle-même le long d'un scellage à bords repliés.

8. Procédé selon la revendication 7 dans lequel une pluralité (14) de sacs ou poches sont assemblés dans une relation superposée au moins partiellement chevauchante lorsqu'ils sont fermés par l'étape de scellage.

9. Procédé selon la revendication 8 **caractérisé en ce que** le matériau des sacs d'emballage est un matériau thermorétractable orienté à froid, et **en ce qu'**une étape de retrait thermique est utilisée sur l'ensemble de sacs après scellage.

10. Procédé selon la revendication 9 **caractérisé en ce que** l'étape de retrait thermique est conduite avant ou en même temps que l'étape de séparation des sacs scellés de l'ensemble.

## Patentansprüche

1. Flexibler Verpackungsbehälter (10), der eine offene Öffnung umfasst, durch die ein Produkt in den Behälter eingeführt werden kann und die nach Einführung des Produkts mit einer Flossennaht geschlossen werden kann, um einen versiegelten Behälter zu definieren, wobei der flexible Behälter durch Flossenversiegelung einer thermoplastischen Mehrschichtfolie gebildet wird, **dadurch gekennzeichnet, dass** die äußerste Schicht des flexiblen Behälters eine abschälbare thermoplastische Zusammensetzung umfasst.

2. Behälter nach Anspruch 1 in Form eines Beutels oder einer Tasche (10), der/die gegenüberliegende Wände (10a, 10b) aufweist, die eine erste Fläche an der Innenseite des Beutels oder der Tasche und eine zweite Fläche an der Außenseite des Beutels oder der Tasche aufweisen, wobei die erste Fläche durch eine Siegelfolienschicht gebildet wird und die zweite Fläche durch das abschälbare Material gebildet wird.

3. Beutel oder Tasche nach Anspruch 2, bei dem/der die Siegelschicht leicht zu öffnen ist.

4. Beutel oder Tasche nach Anspruch 3, bei dem/der die Schälkraft, die erforderlich ist, um den Beutel oder die Tasche (10) durch Abtrennen der Siegelschichten der Beutelwände zu öffnen, höher ist als die Schälkraft, die erforderlich ist, um die Außenseiten von benachbarten Beuteln voneinander zu trennen.

5. Beutel oder Tasche nach einem der Ansprüche 2 bis 4, bei dem/der die Folie des Beutels oder der Tasche (10) eine kaltorientierte und wärmeschrumpfbare Folie ist.

6. Verpackungsbehälter nach einem der Ansprüche 1 bis 5, **dadurch gekennzeichnet, dass** die Wand (10a, 10b) des Behälters mindestens eine Sperrschicht enthält.

7. Verfahren zur Herstellung von Paketen von verschlossenen Verpackungsbeuteln oder -taschen (8, 10), bei dem ein Produkt in jeden/jede einer Vielzahl von Beuteln oder Taschen (8, 10) eingeführt wird und die Beutel oder Taschen versiegelt werden, um die Produkte in den Beuteln oder Taschen versiegelt einzuschließen, **dadurch gekennzeichnet, dass** die äußere Oberfläche der Beutel oder Taschen eine abschälbare thermoplastische Zusammensetzung umfasst und dass die innere Oberfläche der Beutel oder Taschen eine Siegelschicht ist, die mit sich selbst entlang einer Flossennaht verbunden werden kann.

8. Verfahren nach Anspruch 7, bei dem mehrere (14) der Beutel oder Taschen in zumindest teilweise überlappender übereinandergelegter Beziehung angeordnet sind, wenn sie durch den Siegelschritt verschlossen werden.

9. Verfahren nach Anspruch 8, **dadurch gekennzeichnet, dass** das Material der Verpackungsbeutel ein kaltorientiertes, wärmeschrumpfbares Material ist und dass nach der Versiegelung ein Heißschrumpfschritt auf die Anordnung von Beuteln angewendet wird.

10. Verfahren nach Anspruch 9, **dadurch gekennzeichnet, dass** der Heißschrumpfschritt vor oder gleichzeitig mit dem Schritt der Trennung der versiegelten Beutel von der Anordnung durchgeführt wird.
